# FASCICULE DE BREVET EUROPEEN

(11) **EP 4 540 109 B1**
(45) Date de publication et mention de la délivrance du brevet: **27.05.2026**
(21) Numéro de dépôt: 23731636.9
(22) Date de dépôt: 07.06.2023
(51) Int. Cl.: B60T 5/00, F16D 55/28, F16D 65/095, F16D 65/12, F16D 65/807, F16D 65/827, F16D 65/847

(54) **DISQUE DE FREIN VENTILÉ**
BELÜFTETE BREMSSCHEIBE
VENTILATED BRAKE DISC

(30) Priorité: 20.06.2022 FR 2206048
(43) Date de publication de la demande: 23.04.2025
(73) Titulaire: Renault s.a.s, 92100 Boulogne Billancourt (FR)
(72) Inventeur: GEY, Yves, 72000 Le Mans (FR); MAGNIN, Christophe, 72000 Le Mans (FR); ZHANG, Weiran, 78280 Guyancourt (FR)
(86) Numéro de dépôt international: PCT/EP2023/065298
(87) Numéro de publication internationale: WO 2023/247190

(56) Documents cités:
- EP-A1- 1 766 260
- EP-B1- 1 766 260
- WO-A1-01/27490
- WO-A1-01/29442
- WO-A1-2011/015962
- WO-A1-2011/058594
- WO-A1-2012/164465
- WO-A1-2018/122668
- WO-A1-2021/024084
- WO-A2-2006/105131
- WO-A2-2009/003659
- WO-A2-2012/085272
- US-A- 4 865 167
- US-A- 5 542 503
- US-A1- 2009 272 609
- US-A1- 2021 108 689

## Description

### Domaine Technique de l'invention

L'invention concerne un disque de frein ventilé comprenant un agencement particulier de plots de liaison entre deux plateaux annulaires du disque de frein, comme décrit dans les documents WO 0129442 A1, ou US5542503A. L'invention porte aussi sur un véhicule automobile comprenant un tel disque de frein ventilé.

### Etat de la technique antérieure

Les disques de frein des véhicules automobiles sont susceptibles de s'échauffer fortement dans certaines conditions de fonctionnement, comme par exemple lors d'une descente prolongée. Une température trop importante du disque de frein peut conduire à un dysfonctionnement du système de freinage. Pour améliorer le refroidissement des disques de frein il est connu d'utiliser des disques de frein ventilés. De tels disques de frein comprennent deux plateaux annulaires distincts et centrés sur un même axe de révolution. Chacun des deux plateaux annulaires comprend une surface de friction destinée à coopérer avec une plaquette de frein d'un étrier de frein. Les deux plateaux annulaires sont espacés l'un de l'autre selon l'axe de révolution et sont liés entre eux par un ensemble de plots de liaison. Un volume libre dans lequel de l'air peut circuler est ainsi formé entre les deux plateaux annulaires. Un tel disque de frein comprend ainsi des surfaces d'échange thermique importantes et peut se refroidir relativement efficacement. Toutefois, la capacité de se refroidir des disques de frein ventilés connus de l'état de la technique est encore insuffisante. La difficulté à refroidir efficacement les disques de frein est particulièrement avérée lorsque ces derniers sont utilisés en combinaison avec des jantes faiblement poreuses ce qui diminue la circulation d'air autour des disques de frein.

### Présentation de l'invention

Le but de l'invention est de fournir un disque de frein remédiant aux inconvénients ci-dessus et améliorant les disques de frein connus de l'art antérieur.

Plus précisément, un objet de l'invention est un disque de frein apte à se refroidir plus efficacement.

### Résumé de l'invention

L'invention se rapporte à un disque de frein ventilé comprenant deux plateaux annulaires comprenant chacun une surface de friction, les deux plateaux étant centrés sur un même axe et espacés l'un de l'autre selon cet axe, les deux plateaux étant liés entre eux par un ensemble de plots de liaison, l'ensemble de plots de liaison comprenant :
- une première rangée de plots de liaison répartis le long d'un premier cercle centré sur ledit axe, au moins une pluralité des plots de liaison de la première rangée comprenant une section piriforme dans un plan orthogonal audit axe, de forme allongée radialement et s'amincissant dans une direction centrifuge,
- une deuxième rangée de plots de liaison répartis le long d'un deuxième cercle centré sur ledit axe, les plots de liaison de la deuxième rangée comprenant une section de forme circulaire dans un plan orthogonal audit axe,
le diamètre du premier cercle étant strictement inférieur au diamètre du deuxième cercle.

La première rangée comprend des plots de liaison présentant une section de forme circulaire dans un plan orthogonal audit axe.

La première rangée est formée par la répétition d'un motif comprenant :
- un premier plot de liaison de section piriforme
- un deuxième plot de liaison de section piriforme, le deuxième plot de liaison étant adjacent au premier plot de liaison,
- un troisième plot de liaison de section circulaire, le troisième plot de liaison étant adjacent au deuxième plot de liaison.

Le disque de frein ventilé peut comprendre une interface de fixation annulaire centré sur ledit axe et reliée à au moins un des deux plateaux par un ensemble de pattes de liaison, chaque patte de liaison étant positionnée radialement en face d'un plot de liaison de section circulaire de ladite première rangée.

L'ensemble de plots de liaison peut comprendre une troisième rangée de plots de liaison répartis le long d'un troisième cercle centré sur ledit axe, les plots de liaison de la troisième rangée comprenant une section piriforme dans un plan orthogonal audit axe, de forme allongée radialement et s'amincissant dans une direction centrifuge, le diamètre du premier cercle étant strictement supérieur au diamètre du troisième cercle.

Lesdites pattes de liaison peuvent s'étendre radialement jusqu'à un sixième cercle centré sur ledit axe, le sixième cercle intersectant les plots de liaison de la troisième rangée.

Chaque plateau peut comprendre une surface interne en regard de l'autre plateau, la surface interne de chaque plateau comprenant un ensemble de bossages, l'ensemble des bossages comprenant une quatrième rangée de bossages répartis le long d'un quatrième cercle centré sur ledit axe.

L'ensemble des bossages peut comprendre une cinquième rangée de bossages répartis le long d'un cinquième cercle centré sur ledit axe, le diamètre du premier cercle étant strictement inférieur au diamètre du quatrième cercle, et/ou strictement supérieur au diamètre du cinquième cercle.

Le diamètre du deuxième cercle peut être strictement supérieur au diamètre du quatrième cercle, et/ou le diamètre du troisième cercle peut être strictement inférieur au diamètre du cinquième cercle.

L'invention se rapporte également à un véhicule automobile, comprenant un disque de frein ventilé tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue en perspective d'un disque de frein selon un mode de réalisation de l'invention.
La figure 2 est une vue en coupe du disque de frein, selon une coupe orthogonale à un axe de révolution du disque de frein.
La figure 3 est une vue d'un plan de coupe orthogonal à l'axe de révolution du disque de frein, d'une partie du disque de frein.
La figure 4 est une vue en coupe d'une partie du disque de frein, selon une coupe parallèle à l'axe de révolution du disque de frein.
La figure 5 illustre un résultat de simulation d'une distribution de vitesse d'un flux d'air traversant le disque de frein selon un mode de réalisation de l'invention.
La figure 6 illustre un résultat de simulation d'une distribution de vitesse d'un flux d'air traversant un premier disque de frein différent de l'invention.
La figure 7 illustre un résultat de simulation d'une distribution de vitesse d'un flux d'air traversant un deuxième disque de frein différent de l'invention.

### Description détaillée

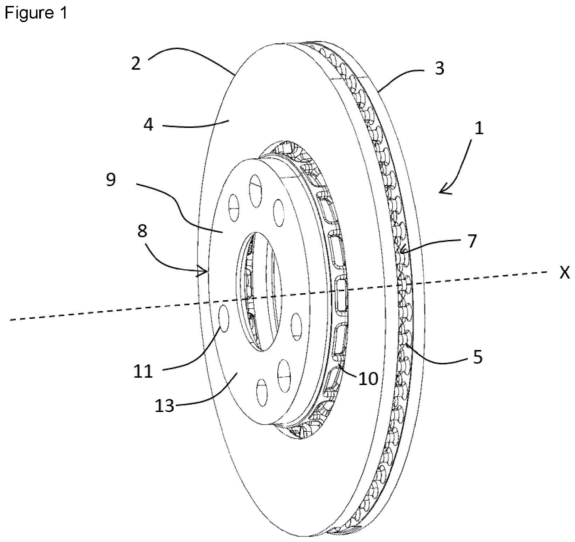

La figure 1 illustre un disque de frein 1 selon un mode de réalisation de l'invention. Le disque de frein 1 comprend deux plateaux 2 et 3, annulaires, distincts l'un de l'autre, et centrés sur un même axe X. L'axe X correspond à l'axe de rotation de la roue à laquelle le disque de frein 1 est destiné à être fixé. Chacun des deux plateaux 2, 3 comprend une surface de friction 4 destinée à coopérer avec une plaquette de frein d'un étrier de frein (non représenté). Les surfaces de friction 4 sont des surfaces planes, s'étendant orthogonalement à l'axe X. Les plateaux 2, 3 ont une forme globalement cylindrique. L'axe X correspond à un axe de révolution de cette forme cylindrique.

Les deux plateaux 2, 3 sont espacés l'un de l'autre selon l'axe X et sont liés entre eux par un ensemble de plots de liaison 5, ou ailettes 5. Un volume libre dans lequel de l'air peut circuler est ainsi formé entre les deux plateaux 2, 3. La surface de friction 4 de chaque plateau est tournée vers l'extérieur du disque de frein. Chaque plateau comprend aussi une surface interne 7, opposée à la surface de friction 4, et tournée vers l'autre plateau. Autrement dit, les surfaces interne 7 de chaque plateau 2 et 3 sont en regard l'une de l'autre. Les plots de liaison 5 s'étendent donc entre les surfaces internes 7 de chaque plateau 2, 3.

Le disque de frein 1 comprend en outre une interface de fixation 8 configurée pour fixer le disque de frein 1 à une roue d'un véhicule automobile. A cet effet, l'interface de fixation 8 comprend une partie annulaire 9 centrée sur l'axe X et reliée par des pattes de liaison 10 aux plateaux 2 et 3. La partie annulaire 9 comprend en outre des trous de fixation 11 destinés à coopérer avec des vis de fixation pour la fixation du disque de frein 1.

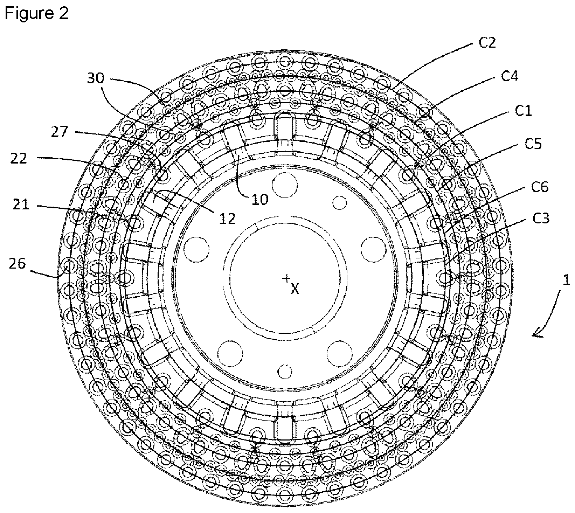

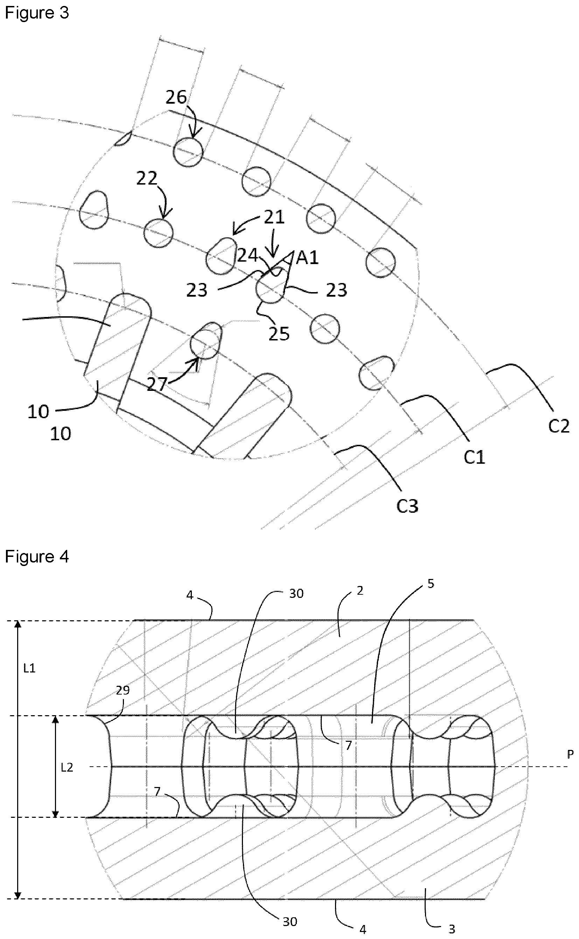

Les pattes de liaison 10 s'étendent radialement et relient un pourtour extérieur de la partie annulaire 9 à un pourtour intérieur des deux plateaux 2 et 3. Une extrémité 12 (mieux visible sur les figures 2 et 3) des pattes de liaison 10 s'étend entre les deux plateaux 2 et 3 et est en contact avec les surfaces internes 7 de ces deux plateaux. L'extrémité 12 des pattes de liaison peut notamment avoir une forme arrondie.

La partie annulaire 9 comprend une face plane 13, s'étendant orthogonalement à l'axe X, et décalée selon l'axe X par rapport aux surfaces de friction 4 du plateau 2. Notamment, le plan dans lequel s'étend la face plane 13 de la partie annulaire 9 n'est pas interposé entre le plan dans lequel s'étend la surface de friction 4 du plateau 2 et le plan dans lequel s'étend la surface de friction 4 du plateau 3.

Les deux plateaux 2, 3 et les plots de liaison 5 forment un ensemble monobloc, c'est-à-dire un ensemble venu de matière. En particulier, le disque de frein peut être en métal et obtenu par fonderie. De préférence, les deux plateaux 2, 3, les plots de liaison 5 et l'interface de fixation 8 forment un ensemble monobloc mais, en variante, l'interface de fixation 8 pourrait être fixée, par exemple visée à l'ensemble formé par les deux plateaux 2, 3 et les plots de liaison 5.

Le diamètre du pourtour extérieur des plateaux 2,3 peut être par exemple compris entre 200mm et 350mm inclus, de préférence entre 240mm et 300mm inclus, notamment environ 280mm. Le diamètre du pourtour intérieur des plateaux 2,3 peut être par exemple compris entre 100mm et 250mm inclus, de préférence entre 120mm et 200mm inclus, notamment environ 160mm. La largeur L1 séparant les surfaces de friction 4 des deux plateaux 2, 3 suivant l'axe X peut être comprise entre 20mm et 30mm, par exemple environ 24mm. La largeur L2 séparant les surfaces internes 7 des deux plateaux 2, 3 suivant l'axe X peut être comprise entre 5mm et 15mm, notamment entre 8mm et 10mm.

L'ensemble des plots de liaison 5 est réparti sur plusieurs rangées circulaires. En particulier, l'ensemble des plots de liaison comprend une première rangée de plots de liaison répartis le long d'un premier cercle C1, une deuxième rangée de plots de liaison répartis le long d'un deuxième cercle C2, et une troisième rangée de plots de liaison répartis le long d'un troisième cercle C3. Les trois cercles C1, C2 et C3 sont concentriques et centrés sur l'axe X1. Le diamètre du premier cercle C1 est strictement inférieur au diamètre du deuxième cercle C2 et il est strictement supérieur au diamètre du troisième cercle C3. Selon un mode de réalisation de l'invention, l'ensemble des plots de liaison comprend uniquement ces trois rangées de plots de liaison. Selon une variante de réalisation, l'ensemble des plots de liaison 5 pourrait ne pas comprendre ladite troisième rangée de plots de liaison. Selon une autre variante de réalisation, l'ensemble des plots de liaison pourrait comprendre plus de trois rangées de plots de liaison, par exemple quatre rangées de plots de liaison, voire même cinq rangées de plots de liaison. Ces rangées supplémentaires pourraient être agencés chacune sur un cercle distinct et concentrique aux cercles C1, C2 et C3.

A titre d'exemple, si le disque de frein 1 comprend un pourtour extérieur de diamètre égal à 280mm et un pourtour intérieur de diamètre égal à 180mm, le diamètre du premier cercle C1 peut être compris entre 210mm et 250mm inclus. Le diamètre du deuxième cercle C2 peut être compris entre 255mm et 275 mm inclus. Le diamètre du troisième cercle C3 peut être compris entre 185mm et 205 mm inclus. Dans l'hypothèse où le disque de frein 1 présenterait un pourtour extérieur de diamètre différent, ces dimensions pourrait être adaptées proportionnellement.

La figure 2 et la figure 3 sont des vues en coupe selon un plan P orthogonal à l'axe X et passant à équidistance des surfaces internes 7 des deux plateaux 2, 3. Ces figures permettent donc d'observer une section orthogonale à l'axe X des différents plots de liaison 5. La position d'un plot de liaison peut être définie de manière précise par la position d'un barycentre de la section selon le plan P du disque de frein 1. Par exemple, dans le cas particulier où cette section présente une forme de cercle, alors le barycentre correspond au centre de ce cercle.

La première rangée de plots de liaison comprend des plots de liaison de deux sortes, différenciés par les références 21 et 22. Les plots de liaison 21 forment une première partie des plots de liaison de la première rangée et les plots de liaison 22 forment une deuxième partie des plots de liaison de la première rangée.

Les plots de liaison 21 comprennent une section dans le plan P de forme allongée radialement et s'amincissant dans une direction centrifuge, c'est-à-dire dans une direction radiale vers le pourtour extérieur des plateaux 2, 3. En particulier, la section des plots de liaison 21 est piriforme, c'est-à-dire qu'elle prend la forme d'une goutte d'eau qui tomberait par gravité vers l'axe X. Cette section piriforme est notamment caractérisée par deux côtés opposés 23 formant un angle A1 compris entre 20° et 60°, de préférence entre 30° et 50°. Les deux côtés opposés 23 sont reliés par des arrondis 24, 25 en forme de demi-cercle. Un premier arrondi 24, du côté du pourtour extérieur des plateaux 2, 3 peut avoir un rayon compris entre 1mm et 5mm inclus, par exemple environ 2mm. Un deuxième arrondi 25, du côté du pourtour intérieur des plateaux 2, 3 peut avoir un rayon strictement supérieur au rayon du premier arrondi 24, notamment un rayon compris entre 2mm et 6mm inclus, par exemple environ 3mm.

Les plots de liaison 22 de la première rangée comprennent une section dans le plan P de forme circulaire. Cette forme circulaire peut présenter un rayon sensiblement égal au rayon du deuxième arrondi 24, notamment un rayon compris entre 2mm et 6mm inclus, par exemple environ 3mm. En variante, la première rangée pourrait ne comprendre que les plots de liaison 21.

Les plots de liaison 26 de la deuxième rangée comprennent également une section dans le plan P de forme circulaire. Cette forme peut aussi présenter un rayon compris entre 2mm et 6mm inclus, par exemple environ 3mm. Cette forme circulaire peut notamment être identique à la forme circulaire des plots de liaison 22 de la première rangée. En variante, tout ou partie des plots de liaison de la deuxième rangée pourrait présenter une section piriforme.

Les plots de liaison 27 de la troisième rangée comprennent également une section piriforme dans le plan P, c'est-à-dire une section de forme allongée radialement et s'amincissant dans une direction centrifuge. Cette forme, dite en goutte d'eau, peut notamment être identique à la forme des plots de liaison 21 de la première rangée. En variante, tout ou partie des plots de liaison de la troisième rangée pourrait présenter une section circulaire.

La première rangée est formée par la répétition d'un motif comprenant un premier plot de liaison 21, un deuxième plot de liaison 21, et un troisième plot de liaison 22. Le deuxième plot de liaison est adjacent au premier plot de liaison (autrement dit, directement à côté du premier plot de liaison) et le troisième plot de liaison est adjacent au deuxième plot de liaison. On comprend donc que chaque motif comprend deux plots de liaison piriformes et un plot de liaison de forme circulaire. Par conséquent, la première rangée comprend deux fois plus de plots de liaison piriformes que de plots de liaison de forme circulaire. La distance séparant les différents plots de liaison de la première rangée peut être constante.

Comme cela est visible sur la figure 2, la première rangée comprend 18 tels motifs, soit 36 plots de liaison piriformes et 18 plots de liaison de forme circulaire. Le disque de frein 1 comprend ainsi une symétrie de rotation de 10° d'angle, au moins au niveau de l'agencement des plots de liaison. En variante, le nombre de répétitions du motif pourrait être différent, par exemple compris entre 10 et 30 répétitions inclus.

Avantageusement, la première rangée comprend un nombre de plots de forme circulaire égal au nombre de pattes de liaison 10. Par conséquent, le nombre de répétition du motif est aussi égal au nombre de pattes de liaison 10. Chaque patte de liaison 10 est positionnée radialement en face d'un plot de liaison 22, c'est-à-dire en face d'un plot de forme circulaire. Par ailleurs, le nombre total de plots de liaison de la première rangée (en l'espèce 54) est égal au nombre de plots de liaison 26 de la deuxième rangée. Chaque plot de liaison 21 ou 22 de la première rangée est positionné radialement en face d'un plot de liaison 26 de la deuxième rangée. La configuration obtenue permet un meilleur écoulement de l'air entre les plots de liaison et donc un meilleur refroidissement du disque de frein.

Les plots de liaison 27 de la troisième rangée s'étendent chacun entre deux pattes de liaison 10 adjacentes. Le nombre de plots de liaison 27 de la troisième rangée est donc identique au nombre de pattes de liaison 10 (soit 18 plots de liaison 27 dans le cas d'espèce). Chaque plot de liaison 27 de la troisième rangée est positionné radialement en face d'un espace formé entre deux plots de liaison piriformes adjacents de la première rangée.

Les pattes de liaison 10 s'étendent radialement jusqu'à un sixième cercle C6 centré sur l'axe X. Ce sixième cercle C6 intersecte les plots de liaison 27 de la troisième rangée, autrement dit le cercle C6 coupe la section dans le plan P des plots de liaison 27. Avantageusement, le troisième cercle C3 et le sixième cercle C6 peuvent être distants l'un de l'autre d'une distance inférieure ou égale à 10mm, notamment inférieure ou égale à 5mm. Selon une variante de réalisation le troisième cercle C3 et le sixième cercle C6 pourrait être confondus.

En référence à la figure 4, on observe que les plots de liaison 5 comprennent une section variable en fonction du plan de coupe considéré. Chaque plot de liaison 5 est le plus étroit au niveau du plan P et s'élargit progressivement en direction des surfaces internes 7 des plateaux 2 et 3. En particulier, des congés 29 sont formés à l'interface entre les plots de liaison 5 et les surfaces internes 7. Le plan P peut former un plan de symétrie de l'ensemble formé par les surfaces internes 7 des plateaux 2 et 3 et les plots de liaison 5. Une section des plots de liaison selon un plan orthogonal à l'axe X et différent du plan P peut être homothétique à la section des plots de liaison selon le plan P.

Par ailleurs, la surface interne 7 de chaque plateau 2, 3 comprend aussi un ensemble de bossages 30. Les bossages 30 (bien visibles sur la figure 4) sont des reliefs en saillie par rapport à la surface interne 7 de chaque plateau 2, 3. Ils présentent une forme globalement arrondie et dépourvue d'arrête. Ils peuvent comprendre une section orthogonale à l'axe X de forme sensiblement circulaire. Les bossages 30 sont agencés par paire, chaque bossage 30 du premier plateau 2 étant positionné en vis-à-vis d'un bossage 30 du deuxième plateau 3 suivant l'axe X, sans être en contact entre eux. Chaque bossage peut s'élever sur une hauteur grossièrement égale à un quart de la largeur L2 séparant les surfaces internes 7. Les paires de bossages 30 forment ainsi des rétrécissements locaux de l'espace séparant les surfaces internes 7.

L'ensemble des bossages comprend une quatrième rangée de bossages répartis le long d'un quatrième cercle C4 et une cinquième rangée de bossages répartis le long d'un cinquième cercle C5. Le quatrième cercle C4 et le cinquième cercle C5 sont centrés sur l'axe X. En variante, le disque de frein pourrait ne comprendre aucun bossage ou bien uniquement la quatrième rangée ou encore uniquement la cinquième rangée de bossages. Les bossages pourraient également être répartis sur un plus grand nombre de cercles, par exemple trois cercles ou quatre cercles.

Le diamètre du quatrième cercle C4 est strictement supérieur au diamètre du premier cercle C1 et strictement inférieur au diamètre du deuxième cercle C2. Par conséquent, la quatrième rangée de bossages 30 est intercalée radialement entre la première rangée de plots de liaison 21, 22 et la deuxième rangée de plots de liaison 26. Le quatrième cercle C4 peut être positionné sensiblement à équidistance des cercles C1 et C2. Le diamètre du cinquième cercle C5 est strictement inférieur au diamètre du premier cercle C1 et strictement supérieur au diamètre du troisième cercle C3. Par conséquent, la cinquième rangée de bossages 30 est intercalée radialement entre la première rangée de plots de liaison 21, 22 et la troisième rangée de plots de liaison 27. Le cinquième cercle C5 peut être positionné sensiblement à équidistance des cercles C1 et C3.

En fonctionnement, le disque de frein 1 est fixé à la roue d'un véhicule et tourne autour de l'axe X. Il s'établit un flux d'air centrifuge passant entre les deux plateaux 2 et 3 en raison d'un écart de pression d'air entre le pourtour extérieur des plateaux et leur pourtour intérieur. L'air s'écoule donc dans l'espace défini entre les deux surfaces internes 7 en passant entre les différentes pattes de liaison 10. Le flux d'air est guidé dans cet espace par les différents plots de liaison 5. Des turbulences d'air sont susceptibles de se former en fonction de la forme et de la position de ces plots de liaison 5. Avantageusement, la position et la forme spécifiques des plots de liaison permet d'uniformiser le flux d'air au sein de l'espace défini entre les deux surfaces internes 7. En particulier la forme en goutte d'eau des plots de liaison minimise les turbulences d'air et offre une faible résistance au flux d'air. L'écoulement de l'air est ainsi encore amélioré.

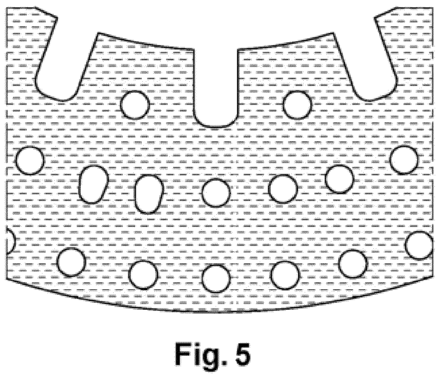

La figure 5 illustre notamment une distribution de vitesse du flux d'air dans l'espace formé entre les deux plateaux 2, 3. Cette distribution de vitesse est particulièrement homogène, c'est-à-dire qu'il n'y a pas de zones où le flux d'air est très rapide et d'autres où il est beaucoup plus lent. Avec un disque de frein selon l'invention tournant à 800 tours par minute autour de l'axe X, l'amplitude de vitesse entre les zones où l'air circule le plus vite et les zones où l'air circule le plus lentement est seulement de l'ordre de 20m/s. Une telle homogénéité se caractérise également par un écart de pression très faible entre les différentes zones de l'espace formé entre les deux surfaces internes 7. Dans les conditions de fonctionnement précitées, cet écart de pression est inférieur ou égal à 1,5mBar, notamment de l'ordre de 1.3mBar.

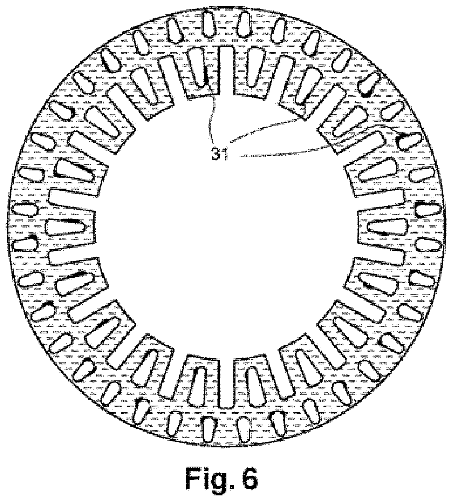

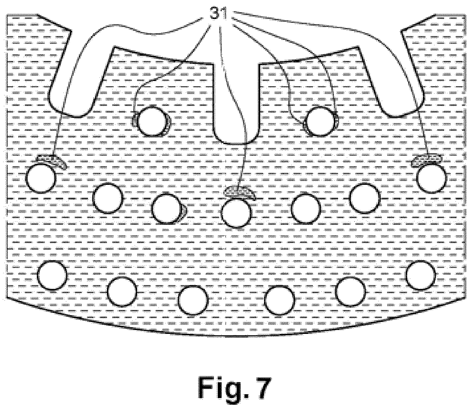

Inversement, avec les freins à disque connus de l'état de la technique et fonctionnant dans les mêmes conditions, l'amplitude de vitesse entre les zones où l'air circule le plus vite et les zones où l'air circule le plus lentement atteint une valeur de 30m/s, voire même encore davantage. L'écart de pression entre les différentes zones de l'espace formé entre les deux surfaces internes 7 est supérieur ou égal à 5mBar, voire même parfois supérieur ou égal à 10mBar. A titre d'exemple, les figures 6 et 7 illustrent la distribution de vitesse du flux d'air dans l'espace formé entre les deux plateaux de deux disques de frein différents de l'invention, mais fonctionnant dans les mêmes conditions. Des zones plus sombres 31 mettent en évidence que ces distributions de vitesse sont particulièrement peu homogènes. Le refroidissement obtenu avec de tels disques de frein est moins performant.

Par ailleurs, les bossages 30 permettent d'augmenter la surface d'échange thermique avec l'air, ce qui améliore encore l'efficacité du refroidissement. L'agencement proposé des plots de liaison 5 et des bossages 30 permet ainsi d'atteindre une surface d'échange thermique supérieure ou égale à 900cm2 pour un disque de frein comprenant un diamètre extérieur de 280mm. L'invention permet ainsi d'obtenir un excellent compromis entre une surface d'échange thermique la plus grande possible et une variation de pression entre les différentes zones de l'espace formé entre les deux surfaces internes 7 aussi faible que possible. Lorsque le disque de frein 1 s'échauffe consécutivement au frottement des plaquettes de frein contre les surfaces de friction 4, il évacue efficacement la chaleur emmagasinée grâce à un flux d'air entre les deux surfaces internes 7. Ainsi, la température du disque de frein demeure modérée et l'efficacité du système de freinage est préservée.

## Revendications

1. Disque de frein (1) ventilé comprenant deux plateaux (2, 3) annulaires comprenant chacun une surface de friction (4), les deux plateaux étant centrés sur un même axe (X) et espacés l'un de l'autre selon cet axe, les deux plateaux étant liés entre eux par un ensemble de plots de liaison (5), comprenant
- une première rangée de plots de liaison (21, 22) répartis le long d'un premier cercle (C1) centré sur ledit axe, au moins une pluralité des plots de liaison (21) de la première rangée comprenant une section piriforme dans un plan orthogonal audit axe, de forme allongée radialement et s'amincissant dans une direction centrifuge,
- une deuxième rangée de plots de liaison (26) répartis le long d'un deuxième cercle (C2) centré sur ledit axe, les plots de liaison de la deuxième rangée comprenant une section de forme circulaire dans un plan orthogonal audit axe, le diamètre du premier cercle étant strictement inférieur au diamètre du deuxième cercle.
la première rangée comprenant des plots de liaison (22) présentant une section de forme circulaire dans un plan orthogonal audit axe, **caractérisé en ce que** la première rangée est formée par la répétition d'un motif comprenant un premier plot de liaison (21) de section piriforme, un deuxième plot de liaison (21) de section piriforme, le deuxième plot de liaison étant adjacent au premier plot de liaison, un troisième plot de liaison (22) de section circulaire, le troisième plot de liaison étant adjacent au deuxième plot de liaison,

2. Disque de frein (1) ventilé selon la revendication précédente, **caractérisé en ce qu'**il comprend une interface de fixation (8) annulaire centré sur ledit axe (X) et reliée à au moins un des deux plateaux (2, 3) par un ensemble de pattes de liaison (10), chaque patte de liaison étant positionnée radialement en face d'un plot de liaison (22) de section circulaire de ladite première rangée.

3. Disque de frein (1) ventilé selon l'une des revendications précédentes, caractérisé en ce l'ensemble de plots de liaison comprend une troisième rangée de plots de liaison (27) répartis le long d'un troisième cercle (C3) centré sur ledit axe (X), les plots de liaison de la troisième rangée comprenant une section piriforme dans un plan orthogonal audit axe, de forme allongée radialement et s'amincissant dans une direction centrifuge, le diamètre du premier cercle étant strictement supérieur au diamètre du troisième cercle.

4. Disque de frein (1) ventilé selon les revendications 2 et 3, **caractérisé en ce que** lesdites pattes de liaison (10) s'étendent radialement jusqu'à un sixième cercle (C6) centré sur ledit axe (X), le sixième cercle intersectant les plots de liaison (27) de la troisième rangée.

5. Disque de frein (1) ventilé selon l'une des revendications précédentes, **caractérisé en ce que** chaque plateau (2, 3) comprend une surface interne (7) en regard de l'autre plateau, la surface interne de chaque plateau comprenant un ensemble de bossages (30), l'ensemble des bossages comprenant une quatrième rangée de bossages répartis le long d'un quatrième cercle (C4) centré sur ledit axe.

6. Disque de frein (1) ventilé selon la revendication précédente, **caractérisé en ce que** l'ensemble des bossages (30) comprend une cinquième rangée de bossages répartis le long d'un cinquième cercle (C5) centré sur ledit axe (X), le diamètre du premier cercle (C1) étant strictement inférieur au diamètre du quatrième cercle (C4), et/ou strictement supérieur au diamètre du cinquième cercle (C5).

7. Disque de frein ventilé selon la revendication 3 et selon la revendication 6, **caractérisé en ce que** le diamètre du deuxième cercle (C2) est strictement supérieur au diamètre du quatrième cercle (C4), et/ou **en ce que** le diamètre du troisième cercle (C3) est strictement inférieur au diamètre du cinquième cercle (C5).

8. Véhicule automobile, **caractérisé en ce qu'**il comprend un disque de frein (1) ventilé selon l'une des revendications précédentes.

## Patentansprüche

1. Belüftete Bremsscheibe (1), welche zwei Ringplatten (2, 3) umfasst, die jeweils eine Reibfläche (4) aufweisen, wobei die beiden Platten auf derselben Achse (X) zentriert und entlang dieser Achse voneinander beabstandet sind, wobei die zwei Platten durch eine Anordnung von Verbindungsstiften (5) miteinander verbunden sind, welche umfasst:
- eine erste Reihe von Verbindungsstiften (21, 22), die entlang eines ersten Kreises (C1) verteilt sind, der auf der Achse zentriert ist, wobei wenigstens mehrere der Verbindungsstifte (21) der ersten Reihe einen birnenförmigen Querschnitt in einer zu der Achse orthogonalen Ebene aufweisen, der von einer radial lang gestreckten und sich in einer zentrifugalen Richtung verjüngenden Form ist,
- eine zweite Reihe von Verbindungsstiften (26), die entlang eines zweiten Kreises (C2) verteilt sind, der auf der Achse zentriert ist, wobei die Verbindungsstifte der zweiten Reihe einen kreisförmigen Querschnitt in einer zu der Achse orthogonalen Ebene aufweisen, wobei der Durchmesser des ersten Kreises streng kleiner als der Durchmesser des zweiten Kreises ist,
wobei die erste Reihe Verbindungsstifte (22) umfasst, die einen kreisförmigen Querschnitt in einer zu der Achse orthogonalen Ebene aufweisen, **dadurch gekennzeichnet, dass** die erste Reihe durch die Wiederholung eines Musters gebildet wird, das einen ersten Verbindungsstift (21) mit birnenförmigem Querschnitt, einen zweiten Verbindungsstift (21) mit birnenförmigem Querschnitt, wobei der zweite Verbindungsstift dem ersten Verbindungsstift benachbart ist, und einen dritten Verbindungsstift (22) mit kreisförmigem Querschnitt, wobei der dritte Verbindungsstift dem zweiten Verbindungsstift benachbart ist, umfasst.

2. Belüftete Bremsscheibe (1) nach dem vorhergehenden Anspruch, **dadurch gekennzeichnet, dass** sie eine ringförmige Befestigungsschnittstelle (8) aufweist, die auf der Achse (X) zentriert ist und mit mindestens einer der beiden Platten (2, 3) durch eine Anordnung von Verbindungslaschen (10) verbunden ist, wobei jede Verbindungslasche radial gegenüber einem Verbindungsstift (22) mit kreisförmigem Querschnitt der ersten Reihe positioniert ist.

3. Belüftete Bremsscheibe (1) nach einem der vorhergehenden Ansprüche, **dadurch gekennzeichnet, dass** die Anordnung von Verbindungsstiften eine dritte Reihe von Verbindungsstiften (27) umfasst, die entlang eines dritten Kreises (C3) verteilt sind, der auf der Achse (X) zentriert ist, wobei die Verbindungsstifte der dritten Reihe einen birnenförmigen Querschnitt in einer zu der Achse orthogonalen Ebene aufweisen, der von einer radial lang gestreckten und sich in einer zentrifugalen Richtung verjüngenden Form ist, wobei der Durchmesser des ersten Kreises streng größer als der Durchmesser des dritten Kreises ist.

4. Belüftete Bremsscheibe (1) nach den Ansprüchen 2 und 3, **dadurch gekennzeichnet, dass** sich die Verbindungslaschen (10) radial bis zu einem sechsten Kreis (C6) erstrecken, der auf der Achse (X) zentriert ist, wobei der sechste Kreis die Verbindungsstifte (27) der dritten Reihe kreuzt.

5. Belüftete Bremsscheibe (1) nach einem der vorhergehenden Ansprüche, **dadurch gekennzeichnet, dass** jede Platte (2, 3) eine Innenfläche (7) aufweist, die der anderen Platte zugewandt ist, wobei die Innenfläche jeder Platte eine Anordnung von Erhebungen (30) umfasst, wobei die Anordnung von Erhebungen eine vierte Reihe von Erhebungen umfasst, die entlang eines vierten Kreises (C4) verteilt sind, der auf der Achse zentriert ist.

6. Belüftete Bremsscheibe (1) nach dem vorhergehenden Anspruch, **dadurch gekennzeichnet, dass** die Anordnung von Erhebungen (30) eine fünfte Reihe von Erhebungen umfasst, die entlang eines fünften Kreises (C5) verteilt sind, der auf der Achse (X) zentriert ist, wobei der Durchmesser des ersten Kreises (C1) streng kleiner als der Durchmesser des vierten Kreises (C4) und/oder streng größer als der Durchmesser des fünften Kreises (C5) ist.

7. Belüftete Bremsscheibe nach Anspruch 3 und nach Anspruch 6, **dadurch gekennzeichnet, dass** der Durchmesser des zweiten Kreises (C2) streng größer als der Durchmesser des vierten Kreises (C4) ist, und/oder dadurch, dass der Durchmesser des dritten Kreises (C3) streng kleiner als der Durchmesser des fünften Kreises (C5) ist.

8. Kraftfahrzeug, **dadurch gekennzeichnet, dass** es eine belüftete Bremsscheibe (1) nach einem der vorhergehenden Ansprüche umfasst.

## Claims

1. Ventilated brake disc (1) comprising two annular plates (2, 3) each comprising a friction surface (4), the two plates being centred on the same axis (X) and spaced apart from one another along this axis, the two plates being connected to one another by a set of connecting studs (5), comprising
- a first row of connecting studs (21, 22) distributed along a first circle (C1) centred on said axis, at least a plurality of the connecting studs (21) of the first row comprising a pear-shaped cross section in a plane orthogonal to said axis, of radially elongate shape and tapering in a centrifugal direction,
- a second row of connecting studs (26) distributed along a second circle (C2) centred on said axis, the connecting studs of the second row comprising a cross section of circular shape in a plane orthogonal to said axis, the diameter of the first circle being strictly smaller than the diameter of the second circle,
the first row comprising connecting studs (22) having a cross section of circular shape in a plane orthogonal to said axis, **characterized in that** the first row is formed by the repetition of a pattern comprising a first connecting stud (21) of pear-shaped cross section, a second connecting stud (21) of pear-shaped cross section, the second connecting stud being adjacent to the first connecting stud, and a third connecting stud (22) of circular cross section, the third connecting stud being adjacent to the second connecting stud.

2. Ventilated brake disc (1) according to the preceding claim, **characterized in that** it comprises an annular fastening interface (8) centred on said axis (X) and connected to at least one of the two plates (2, 3) by a set of connecting tabs (10), each connecting tab being positioned radially opposite a connecting stud (22) of circular cross section of said first row.

3. Ventilated brake disc (1) according to either of the preceding claims, **characterized in that** the set of connecting studs comprises a third row of connecting studs (27) distributed along a third circle (C3) centred on said axis (X), the connecting studs of the third row comprising a pear-shaped cross section in a plane orthogonal to said axis, of radially elongate shape and tapering in a centrifugal direction, the diameter of the first circle being strictly greater than the diameter of the third circle.

4. Ventilated brake disc (1) according to Claims 2 and 3, **characterized in that** said connecting tabs (10) extend radially up to a sixth circle (C6) centred on said axis (X), the sixth circle intersecting the connecting studs (27) of the third row.

5. Ventilated brake disc (1) according to one of the preceding claims, **characterized in that** each plate (2, 3) comprises an inner surface (7) facing the other plate, the inner surface of each plate comprising a set of bosses (30), the set of bosses comprising a fourth row of bosses distributed along a fourth circle (C4) centred on said axis.

6. Ventilated brake disc (1) according to the preceding claim, **characterized in that** the set of bosses (30) comprises a fifth row of bosses distributed along a fifth circle (C5) centred on said axis (X), the diameter of the first circle (C1) being strictly smaller than the diameter of the fourth circle (C4), and/or strictly greater than the diameter of the fifth circle (C5).

7. Ventilated brake disc according to Claim 3 and according to Claim 6, **characterized in that** the diameter of the second circle (C2) is strictly greater than the diameter of the fourth circle (C4), and/or **in that** the diameter of the third circle (C3) is strictly smaller than the diameter of the fifth circle (C5).

8. Motor vehicle, **characterized in that** it comprises a ventilated brake disc (1) according to one of the preceding claims.
